# EUROPEAN PATENT APPLICATION

(11) **EP 4 790 958 A1**
(43) Date of publication of application: **12.08.2026**
(21) Application number: 26151264.4
(22) Date of filing: 12.01.2026
(51) Int. Cl.: H04L 41/14, H04L 43/55, H04L 43/0817

(54) **METHODS FOR VALIDATING COMPLIANCE IN DISASTER RECOVERY EXERCISES**

(30) Priority: 06.02.2025 US 202519046749
(71) Applicant: Capital One Services, LLC, McLean, Virginia 22102 (US)
(72) Inventor: BARNARD, Michael, McLean, VA 22102 (US); SHIOZAKI, Radford, McLean, VA 22102 (US); HA, Jae-Hyun, McLean, VA 22102 (US)
(74) Representative: Boult Wade Tennant LLP

(57) **Abstract**

Systems, methods, and apparatuses are described for validating compliance in disaster recovery exercises (DREs). In conducting a DRE, a method may collect network data and may enrich the collected network data with application data. The method may simulate the unavailability of a cloud network node, collect network data in the new configuration, compare the two collected network data sets, and determine applications that rely on the simulated unavailable cloud network node. The method may indicate which application was resilient to the simulated unavailable network cloud node based on its determination. By enriching, the method may create a mapping to trace each traffic packet back to a specific application and verify whether the specific application's performance complies with the DRE. Unlike the current methods that lead to time-consuming manual analyses that are prone to false positives, the method may validate compliance in an automated way in a near-real-time fashion.

## Description

### FIELD OF USE

Aspects of the disclosure relate generally to disaster recovery plans. More particularly, aspects described herein describe a process for determining and validating compliant applications during disaster recovery exercises (DREs).

### BACKGROUND

In any enterprise where consumers demand access to their data and applications on demand, it is crucial to have a robust computer system that serves consumers efficiently and expeditiously. The computer system may include one or more computer networking systems that involve interconnecting computing devices that exchange data and resources. One factor that impacts the computer system's robustness is how resilient the computer system must be to disasters. Disasters can appear at any time and can negatively affect the working condition of the computer system, causing significant losses to consumers and their data. Downtime and data loss can impose exorbitant costs for retrieving lost information, if not impossible. Some disasters that affect computer systems include software problems, hardware failures, power outages, human error, natural disasters like flood, earthquakes, and hurricanes, network interruptions, cyber-attacks, computer viruses, and phishing incidents.

Before experiencing a disaster, an enterprise may take preventive steps to evaluate whether its computer system is resilient enough to disasters. One of these preventive steps is running DREs, during which the enterprise determines whether the computer system is vulnerable to any foreseeable risks based on the enterprise's needs and requirements. For example, during the DREs, the enterprise may realize that a failback method implemented a while ago does not work in case of a simulated cyber-attack. As another example, during the DREs, the enterprise might find out that a specific server designated as a backup server in case of a computer virus does not function according to the predefined criteria.

Each disaster may be different and affect different parts of the enterprise's computer system. For example, a cyber-attack may negatively impact the entire computer system, whereas a power outage may affect only a portion of the computer system in a specific region. Thus, the enterprise may need to run different DREs for each disaster to determine the resiliency of its computer system.

As computer systems become complex and generate massive amounts of data, it becomes more challenging to effectively run DREs and accurately simulate how the computer system will respond to each disaster. For example, the enterprise may need to run different DREs weekly to determine the resiliency of its computer system to a malicious activity conducted on one of its main servers. If the enterprise intends to run DREs for each foreseeable disaster on a regular basis, massive amounts of data are generated, which imposes a significant burden on the enterprise to process data to evaluate its computer system's resiliency accurately.

### SUMMARY

The following presents a simplified summary of various aspects described herein. This summary is not an extensive overview, and is not intended to identify key or critical elements or to delineate the scope of the claims. The following summary merely presents some concepts in a simplified form as an introductory prelude to the more detailed description provided below.

Aspects described herein relate to validating compliance in DREs to accurately evaluate the resiliency of computer systems in case of a disaster. DREs are one of the most effective ways to test the resiliency of computer systems in case of a real scenario. Generally, enterprises run DREs according to a predetermined plan. During conducting these exercises, some enterprises may rely on a reporting platform, through which different applications self-report whether the applications are compliant with DREs. For example, during DREs in which resiliency to a power outage is simulated and tested, an application may report that the application is compliant with the exercises and acts according to a predetermined plan. The predetermined plan, for instance, may be following a predefined fallback method in case of a power outage. However, due to issues in the application, and sometimes even unknown to the application itself, the application does not accurately report its compliance. For example, an application installed on a backup server, tasked to conduct a set of instructions in case of a power outage, may report that the application is compliant with the running DREs. However, due to an issue in the server, for example, even unknown to the application, the application's report regarding its compliance may not be accurate. In this example, the outcome of DREs cannot accurately reflect the application's resiliency in case of the power outage.

Although current methods in DREs provide advantages to improving the resilience of computer systems, the current methods suffer from several shortcomings. For example, current methods used in DREs collect only the raw network traffic logs. Raw traffic logs may contain IP addresses, ports, and protocols. However, raw network logs do not include all the information needed to evaluate the performance of a computer system in DREs accurately. One of the challenges associated with the current DRE methods is that in a cloud-based environment, IP addresses can change constantly, and consequently, relying on IP addresses to determine which application used which IP address is a challenging problem.

Current methods in DREs employ a reporting platform, allowing applications to self-report compliance during DREs. For example, the current methods in DREs may use a reporting platform, working based on an honor code, via which the applications have an honor code to report compliance with the DREs. For instance, during conducting DREs involving five hundred applications, each of these five hundred applications may report that they are compliant with the predefined criteria delineated in the DREs. However, there may be some issues in fifty applications, for example, even unknown to these fifty applications, that cause their compliance report to be inaccurate. While these fifty applications may report compliance with the predefined criteria, there are no automated methods for validating the compliance report from these applications.

Methods described herein address these and other issues by implementing processes to validate whether reports of network applications accurately reflect applications' compliance during DREs. It is critical to have an accurate resilience report in DREs as it provides a realistic picture of how the network will respond to an actual disaster. By having a precise resiliency report, a network administration team can address the issues discovered in DREs and resolve the problems or at least mitigate the detrimental impacts that the issues may cause in case of the actual disaster.

According to one of the methods described herein, a computing device that run the disclosed method may collect application data and network data in a first network. The application data may include information associated with each application involved in DREs. For example, the computing device may collect detailed specifications of each application, such as their potential dependencies upon other applications, even those not engaged in DREs, communication protocols of each application, their access profiles, and redundancies of each application. The first network data may include IP addresses, ports, protocols, etc. Since the computing device collects the application data and the first network data, the computing device knows, at any moment, which application uses which IP address. Collecting application data enables the computing device to validate that a received compliance report from an application is, in fact, accurate. By comparing the received compliance report from the application and the collected application data, the computing device can not only detect any discrepancy between the report and the actual compliance, but the computing device may also inform the application of a potential issue in the application that caused the inaccurate report.

After collecting the application data and the first network data, the computing device may enrich the collected data. The computing device may cross-reference the application data set and the first network data set. For example, the computing device may determine which application, at what time, at what circumstances, acquired a particular IP address or sent a specific data packet through the first network. This feature may automate the cross-referencing process and frees a network administration team from manually detecting an issue in an application, for example, by determining the position of the application in the first network, examining the associated network logs, subnets, and IP addresses, and finding the issue. The automated feature of the method may save the network administration team thousands of hours in order to check the validity of compliance report.

After enriching the network data with application data, the computing device may perform a resiliency exercise. For example, the computing device may create a scenario by simulation a setting that a cloud network node in the network becomes unavailable.

Due to the simulated unavailability of the cloud network node, the first network may have a new configuration, effectively becoming a second network. The computing device may collect the second network data by monitoring communications between the cloud network nodes and the applications in the second network. The computing device may compare the enriched first network data and the collected second network data. By comparison, the computing device may determine if any application relied on any of the cloud network nodes during the unavailability of the cloud network node. The computing device may output an indication of an application that was resilient to the unavailability of the cloud network node. Since the computing device obtained the data associated with applications in the first and second networks, the computing device may create a mapping to trace each traffic packet back to a specific application and verify whether the specific application's performance complies with the DREs. Unlike the current methods that lead to time-consuming manual analyses that are prone to false positives, the method may validate compliance in an automated way in a near-real-time fashion.

Corresponding methods, apparatus, systems, and non-transitory computer-readable media are also within the scope of the disclosure.

These features, along with many others, are discussed in greater detail below.

### BRIEF DESCRIPTION OF THE DRAWINGS

The present disclosure is illustrated by way of example and not limited in the accompanying figures in which like reference numerals indicate similar elements and in which:
FIG. 1 depicts an example of a computing device that may be used in implementing one or more aspects of the disclosure in accordance with one or more illustrative aspects discussed herein.
FIG. 2 depicts an example method comprising different steps for validating compliance of applications in DREs according to one or more aspects of the disclosure.
FIG. 3 depicts an example method comprising different steps for validating compliance of applications in DREs.
FIG. 4A depicts an example of a network with three applications and three cloud network nodes.
FIG. 4B depicts an example of a simulated network with three applications and two cloud network nodes.
FIG. 5 depicts an example for a visualization output during DREs displayed on a user computing device.

### DETAILED DESCRIPTION

In the following description of the various embodiments, reference is made to the accompanying drawings, which form a part hereof, and in which is shown by way of illustration various embodiments in which aspects of the disclosure may be practiced. It is to be understood that other embodiments may be utilized and structural and functional modifications may be made without departing from the scope of the present disclosure. Aspects of the disclosure are capable of other embodiments and of being practiced or being carried out in various ways. Also, it is to be understood that the phraseology and terminology used herein are for the purpose of description and should not be regarded as limiting. Rather, the phrases and terms used herein are to be given their broadest interpretation and meaning. The use of "including" and "comprising" and variations thereof is meant to encompass the items listed thereafter and equivalents thereof as well as additional items and equivalents thereof.

By way of introduction, an enterprise may run a set of DREs to evaluate the resiliency of its cloud network in case of a disaster. The cloud network may include a set of cloud network nodes such as virtual machines, load balancers, gateways, database nodes, and storage nodes. The cloud network may include a set of communication applications and recovery and backup software. The enterprise may run a DRE with predefined parameters to evaluate the resilience of its cloud network in case of a cyber-attack, for example, in which hackers may control two cloud network nodes of the set of cloud network nodes. As another example, the enterprise may conduct another DRE to assess the resiliency of its cloud network nodes in case of a hardware failure, in which one cloud network node may become unavailable due to hardware failure.

It may be important to know how each application in the set of applications performs in a conducted DRE. For example, the set of applications based on an honor code may report that the set of applications is compliant with the conducted DRE and passes the exercises. As another example, the set of applications may self-certify that applications are compliant. Sometimes, an application from the set of applications may report that the application is compliant with the conducted DRE. However, a component within the application that is unknown to the application may cause noncompliance. For example, an application component that transmits data packets may not follow proper security protocols and transmit confidential data to an unavailable cloud network node. The self-reporting process may suffer from bias and inaccuracy. Thus, merely relying on self-reported compliance from the set of applications may not produce accurate compliance results.

Recording and collecting raw network data, such as IP addresses, ports, and protocols, may improve the compliance report. A team may trace each instance of noncompliance to an application using raw network data. However, since the cloud network takes different configurations, this process, which the team does manually, is inconsistent, takes a lot of time, and leads to false positives.

To remedy these and other issues, aspects described herein relate to validating compliance of applications in DREs. In a DRE, a first network comprises a set of cloud network nodes and a set of applications. For example, the set of cloud network nodes may include load balancers, database nodes, and gateways. The set of applications, for instance, may include simulation tools, communication platforms, and alerting tools. A computing device may collect first network data by monitoring first packet activity of the set of cloud network nodes that provide access to the set of applications. The computing device may be a personal computer, a laptop, a tablet, a mobile device, or any proper computing device. The first packet activity may be communications between the set of applications and the set of cloud network nodes. According to an example, the first network data may include raw network data associated with the first network. The raw network data may include, for example, traffic logs, including all the traffic, either sent or received, by different components in the first network; metrics, such as CPU and memory usage in different components; event logs, such as timestamps associated with different events, and configuration maps. However, the first network data may not include all the information needed to accurately and effectively evaluate the performance of the cloud network in the DRE. For example, the first network data may not include which application, which application component(s), and under what circumstances are involved in exchanging the first packet activity. Since IP addresses constantly change in a typical cloud network, it may be important to keep a record of IP addresses involved in communications at any instant.

The computing device may correlate the first packet activity of the set of cloud network nodes with the set of applications. For example, the computing device may correlate that a specific application in the set of applications sent a data packet containing confidential information to all cloud network nodes in the first network. As another example, the computing device may correlate that an email received by each cloud network node in the set of cloud network nodes at a time instant was sent by two specific applications in the set of applications with particular IP addresses. The computing device may enrich the first network data by correlating the first packet activity of the set of cloud network nodes with the set of applications. For example, the enriched first network data may indicate a set of communications associated with each application in the set of applications and directions related to the set of communications. According to an example, the enriched first network data may indicate that a human resource management software in the set of applications sent had a unidirectional communication with a cloud network node in the set of cloud network nodes. According to another example, the enriched first network data may indicate that a communication platform software in the set of applications received an identical message from two cloud network nodes at two different time instants.

The computing device may simulate the unavailability of one or more cloud network nodes in the set of cloud network nodes. For example, the computing device may simulate that three cloud network nodes from the set of cloud network nodes are shut down and unavailable. The computing device, by simulating unavailability of the one or more cloud network nodes in the set of cloud network nodes, may perform a resiliency exercise.

When the computing device simulates the unavailability of one or more cloud network nodes in the set of cloud network nodes, the computing device may consider a new network, called a second network. The computing device may monitor second packet activity of the set of cloud network nodes that provide access to the set of applications. According to an example, the second packet activity may be communications between the set of applications and the set of cloud network nodes. The computing device may compare the enriched first network data and the second network data. By comparing, the computing device may determine whether at least one application from the set of applications relied on a cloud network node of the set of cloud network nodes during the simulated unavailability of the one or more cloud network nodes from the set of cloud network nodes.

The computing device may indicate, based on its determination, whether at least one application from the set of applications was resilient to the failure of one or more cloud network nodes.

Aspects described herein improve the accuracy of conducting DREs and provide a more accurate assessment of how each application may perform in a cloud network in case of a real disaster. For example, an application may self-report that the application is compliant with the DRE. However, an application component, sometimes unbeknownst to the application, may rely on a simulated unavailable cloud network node. However, according to one of the features described herein, because the computing device previously recorded all the communications in each configuration of the cloud network, the computing device may prove that the application made a mistake in its compliance report. For example, the enriching first network data may provide the computing device a resource to validate compliance reports of each application. Still, according to another feature described herein, when the computing device detects an anomaly in the compliance report of a specific application, the computing device may generate some additional inquiries for the specific application to respond. The specific application may respond to additional inquiries by providing additional data to the computing device to prove that the specific application is compliant. In accordance with another feature described herein, the computing device may create a mapping to trace each traffic packet back to a specific application and verify whether the specific application's performance complies with the DRE. For example, since the computing device tracked each application's performance with all associated details, in case of an anomaly in a compliance report, the computing device may go through the mapping and find and flag the source of the anomaly. Unlike the current methods that lead to time-consuming manual analyses that are prone to false positives, according to features described herein, the computing device may validate applications' compliance in an automated way in a near-real-time fashion, saving thousands of hours of manual labor.

Aspects described herein could not be performed by a human being, whether mentally or otherwise. For example, according to some features described herein, the computing device may monitor the raw network logs of more than a thousand accounts. The size of collected raw network data may be around terabytes. Since network configuration may constantly change, a significant amount of data may be added to terabytes, making it impossible for a human being to process this amount of collected data.

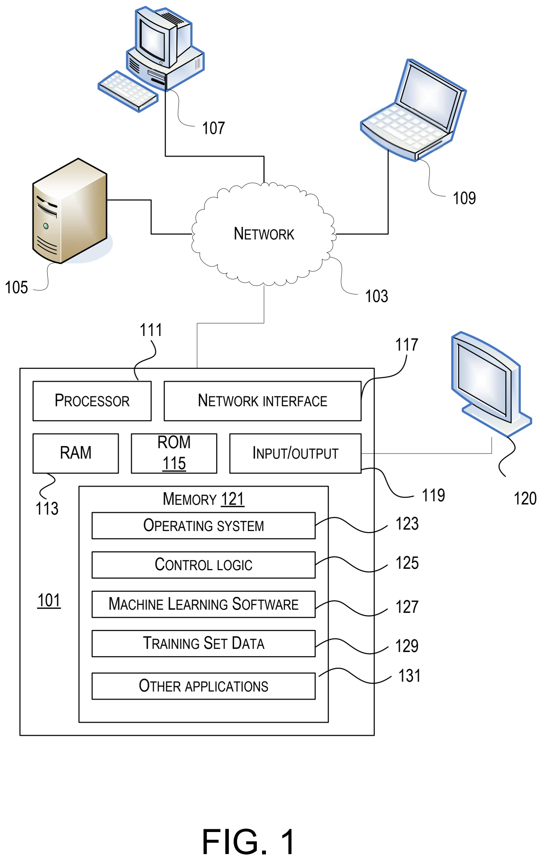

Before discussing these concepts in greater detail, however, several examples of a computing device that may be used in implementing and/or otherwise providing various aspects of the disclosure will first be discussed with respect to FIG. 1.

FIG. 1 illustrates one example of computing device 101 that may be used to implement one or more illustrative aspects discussed herein. For example, computing device 101 may, in some embodiments, implement one or more aspects of the disclosure by reading and/or executing instructions and performing one or more actions based on the instructions. In some embodiments, computing device 101 may represent, be incorporated in, and/or include various devices such as a desktop computer, a computer server, a mobile device (*e.g.,* a laptop computer, a tablet computer, a smart phone, any other types of mobile computing devices, and the like), and/or any other type of data processing device.

Computing device 101 may, in some embodiments, operate in a standalone environment. In others, computing device 101 may operate in a networked environment. As shown in FIG. 1, computing devices 101, 105, 107, and 109 may be interconnected via network 103, such as the Internet. Other networks may also or alternatively be used, including private intranets, corporate networks, LANs, wireless networks, personal networks (PAN), and the like. Network 103 is for illustration purposes and may be replaced with fewer or additional computer networks. A local area network (LAN) may have one or more of any known LAN topologies and may use one or more of a variety of different protocols, such as Ethernet. Devices 101, 105, 107, 109 and other devices (not shown) may be connected to one or more of the networks via twisted pair wires, coaxial cable, fiber optics, radio waves or other communication media.

As seen in FIG. 1, computing device 101 may include processor 111, RAM 113, ROM 115, network interface 117, input/output interfaces 119 (*e.g.,* keyboard, mouse, display, printer, etc.), and memory 121. Processor 111 may include one or more computer processing units (CPUs), graphical processing units (GPUs), and/or other processing units such as a processor adapted to perform computations associated with machine learning. I/O 119 may include a variety of interface units and drives for reading, writing, displaying, and/or printing data or files. I/O 119 may be coupled with a display such as display 120. Memory 121 may store software for configuring computing device 101 into a special purpose computing device in order to perform one or more of the various functions discussed herein. Memory 121 may store operating system software 123 for controlling overall operation of computing device 101, control logic 125 for instructing computing device 101 to perform aspects discussed herein, machine learning software 127, training set data 129, and other applications 131. Control logic 125 may be incorporated in and may be a part of machine learning software 127. In other embodiments, computing device 101 may include two or more of any and/or all of these components (*e.g.,* two or more processors, two or more memories, etc.) and/or other components and/or subsystems not illustrated here.

Devices 105, 107, 109 may have similar or different architecture as described with respect to computing device 101. Those of skill in the art will appreciate that the functionality of computing device 101 (or device 105, 107, 109) as described herein may be spread across multiple data processing devices, for example, to distribute processing load across multiple computers, to segregate transactions based on geographic location, user access level, quality of service (QoS), etc. For example, computing devices 101, 105, 107, 109, and others may operate in concert to provide parallel computing features in support of the operation of control logic 125 and/or machine learning software 127.

FIG. 1 also shows that the computing device 101 may comprise Hardware Security Module (HSM) 132 and/or Quantum Random Number Generator (QRNG) 133. In FIG. 1, HSM 132 may comprise any computing module (e.g., one or more computer chips, attached cards, or the like) which may be capable of managing secrets, performing encryption and/or decryption, and/or otherwise performing security- and/or authentication-related functions. In FIG. 1, HSM 132 may comprise, for instance, one or more secure cryptoprocessor chips which are capable of performing cryptographic operations. In FIG. 1, QRNG 133 may comprise any computing module (e.g., one or more computer chips, attached cards, or the like) capable of generating a random number. Such a random number might be generated using quantum methods which permit the random number to have a high degree of entropy.

One or more aspects discussed herein may be embodied in computer-usable or readable data and/or computer-executable instructions, such as in one or more program modules, executed by one or more computers or other devices as described herein. Generally, program modules include routines, programs, objects, components, data structures, etc. that perform particular tasks or implement particular abstract data types when executed by a processor in a computer or other device. The modules may be written in a source code programming language that is subsequently compiled for execution, or may be written in a scripting language such as (but not limited to) HTML or XML. The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects discussed herein, and such data structures are contemplated within the scope of computer executable instructions and computer-usable data described herein. Various aspects discussed herein may be embodied as a method, a computing device, a data processing system, or a computer program product.

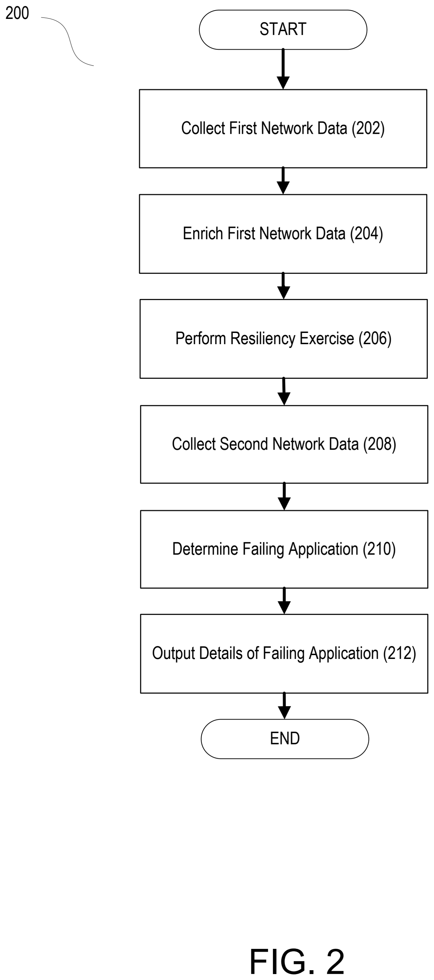

FIG. 2 depicts method 200, comprising different steps for validating compliance of applications in DREs according to one or more aspects of the disclosure. The steps in FIG. 2 may be performed by a computing device, such as any of the devices described concerning FIG. 1. The steps shown in FIG. 2 are illustrative and may be re-arranged, omitted, and/or modified as desired. A computing device may comprise one or more processors and memory storing instructions that, when executed by the one or more processors, cause the performance of one or more of the steps depicted in FIG. 2. One or more non-transitory computer-readable media may store instructions that, when executed, cause the performance of one or more of the steps depicted in FIG. 2.

At step 202, the computing device may collect the first network data. Collecting first network data may include monitoring communications of a set of cloud network nodes that provide access to a set of applications. Communications of the set of cloud network nodes may include various data transmissions and interactions of the set of cloud network nodes. For example, communications of the set of cloud network nodes may include sending a data packet from one cloud network node to an application. According to an example, the first network data may include raw network traffic logs. According to another example, raw network traffic logs may include detailed records of transmitted data packages within the first network. The first network comprises the set of cloud network nodes and the set of applications. The first network may be a cloud environment comprising interconnected systems, hardware, software, and protocols for communications between different elements.

At step 204, the computing device may enrich the collected first network data. Enriching collected first network data may include correlating communications of the set of cloud network nodes with the set of applications. In the correlating process, the computing device may determine which network cloud node from the set of network cloud nodes sent a data packet to which application from the set of applications. Also, in the correlating process, the computing device may determine which application from the set of applications sent a data package to which cloud network node from the set of cloud network nodes. By performing the correlation process, the computing device may create a ground for comparison in later steps. As denoted above, the collected first network data may include raw network traffic logs, which comprise different aspects of the first network activity, such as transmitted packets and their timestamps. Accordingly, enriching raw network traffic logs with application-level detail may provide the feature of cross-referencing network log times with real-time cloud configuration and inventory data. Therefore, enriching the first network data may create a mapping that enables the computing device to track activities associated with each application in the first network. In FIG. 2, step 204 may include adding an indication of a percentage of traffic per region for each application in the set of applications. For example, the computing device may determine that a first application in the set of applications receives 20% of its traffic from the state of Texas, whereas a second application in the set of applications receives 30% of its traffic from the state of Minnesota. The computing device may add this information to increase the richness of the enriched collected first network data, as it may help identify critical regions in DREs.

The first network data that is enriched may have different features. For example, the enriched collected first network data may indicate packet transmissions corresponding to each application in the set of applications and a directionality of packet traffic associated with each application. As another example, the enriched collected first network data may indicate metadata related to each application such as operating system, identities of each application, and different users and devices used in connection with the first network. As another example, the enriched collected first network data may indicate geographical locations associated with each IP address that is communicating with the first network and protocols through which applications conduct their communications in the first network. Enriched collected first network data may include additional information associated with each application that may be used to analyze an application's failure in the conducted DRE expeditiously and accurately. Directionality may denote unidirectional or bidirectional transmissions. The computing device may determine directionality based on the direction of communicated data packets. For example, if an application in the set of applications only receives but does not send data packets, the direction associated with the received data packets is unidirectional. As another example, if the application in the set of applications receives and transmits data packets, the direction associated with the sent or received data packets is bidirectional.

At step 206, the computing device may perform a resiliency exercise. Performing the resiliency exercise may include simulating the unavailability of a cloud network node from the set of cloud network nodes. According to an example, simulating the unavailability of the cloud network node may include a scenario in which the cloud network node is inaccessible or non-functional. According to another example, simulating the unavailability of the cloud network node may include deactivating the cloud network node. For instance, deactivating the cloud network node may include shutting down the cloud network node and updating cloud configuration data.

When the computing device simulates the cloud network node's unavailability, the computing device may consider a new network, called a second network. Since the second network has a configuration different from the first network, the computing device, at step 208, may collect second network data. Collecting second network data may include monitoring traffic in the second network. Due to the unavailability of the cloud network node, communications between the cloud network nodes and the applications in the second network may be different from monitored communications in the first network. For example, due to the unavailability of the simulated unavailable cloud network node, the applications may have stopped their communications with the simulated unavailable cloud network node. However, there may be some applications in the set of applications that still send data packets despite the unavailability of the cloud network node. For example, an application in the set of applications may still send confidential information concerning the enterprise's employees to the simulated unavailable cloud network node. Collecting second network data is important in determining whether applications realized or relied on the unavailability of the simulated cloud network node.

At step 210, the computing device may determine whether any application from the set of applications relied on any of the cloud network nodes from the set of the cloud network nodes during the unavailability of the simulated unavailable cloud network node. Examples of reliance of an application on cloud network nodes may include an application switching to a backup cloud network node, an application redirecting traffic to a cloud network node, an application failing over to a cloud network node in another region, and an application switching to a backup cloud network node in critical circumstances. In its determination, the computing device may compare the enriched first network data and the second network data. For example, if the set of applications consists of ten applications, the computing device may notice that all the ten applications, except one application, stopped communicating, either through sending or receiving, with the simulated unavailable cloud network node. The computing device may flag the one exception application that, for example, still sent data packets to the simulated unavailable cloud network node during the unavailability of the simulated unavailable cloud network node.

At step 212, the computing device may output an indication of whether the application that continued its communication with the simulated unavailable was resilient to the simulated unavailability of the unavailable cloud network node. The computing device may output the indication based on the application's performance data. The application's performance data may include, for example, how many data packets the application sent to the simulated unavailable cloud network node, how long it took the application to realize the absence of the unavailable cloud network node, how the application performed in checking the preset protocols before sending data packets to the simulated unavailable cloud network node.

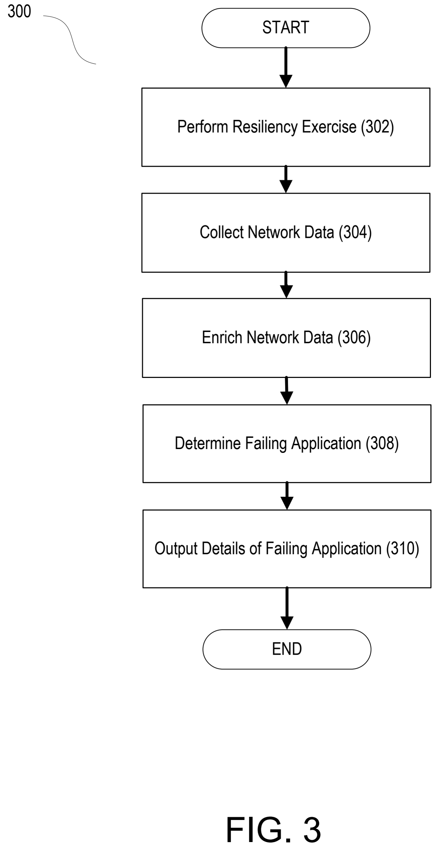

FIG. 3 depicts an example method comprising different steps for validating compliance of a set of applications in DREs. One, some, or all steps described in FIG. 3 may be performed by one or more computing device 101 or devices 105, 107, or 109 in FIG. 1. Steps may be performed out of order and/or may be repeated throughout the method. The steps shown in FIG. 3 are illustrative, and may be re-arranged, omitted, and/or modified as desired. A computing device may comprise one or more processors and memory storing instructions that, when executed by the one or more processors, cause the performance of one or more of the steps depicted in FIG. 3. One or more non-transitory computer-readable media may store instructions that, when executed, cause the performance of one or more of the steps depicted in FIG. 3.

The computing device may monitor performance of the set of applications in a network. The network may be a cloud network. In the network, the set of applications may communicate with a set of network cloud nodes. For a better understanding of the example method in FIG. 3, a sample network may be considered in parallel with FIG. 3, which includes three applications, i.e., applications 302a, 304a and 306a, and three cloud network nodes, i.e., cloud network node 308n, 310n, and 312n.

At step 302, the computing device performs a resiliency exercise. This step may include simulating the unavailability of a cloud network node that communicates with an application in the set of applications. For example, in the sample network mentioned above, the computing device may make cloud network node 310n, which was in communication with applications 302a, 304a, and 306a, unavailable. In FIG. 3, step 302 may include collecting application performance data. For example, the computing device may monitor and collect performances of applications to be used later in step 310. For instance, in the sample network, the computing device may collect performances of applications 302a, 304a, and 306a. The performances of applications may include, for example, the response time associated with each application, load balancing in DREs, data retention for applications, and restorability of applications. In FIG. 3, in simulating the unavailability of the cloud network node at step 302, the computing device may deactivate the cloud network device. For example, in the sample network, the computing device may deactivate cloud network node 310n by putting cloud network node 310n in offline mode.

At step 304, the computing device may collect network data. The computing device may collect network data by monitoring communications of network cloud nodes with the applications. For example, in the sample network mentioned above, the computing device may monitor data packets exchanged between applications 302a, 304a, and 306a and cloud network nodes 308n, 310n, and 312n.

At step 306, the computing device may enrich the collected network data. The network data that is enriched may have different features. For example, the enriched collected network data may indicate packet transmissions corresponding to each application in the set of applications and a directionality of packet traffic associated with each application. As another example, the enriched collected network data may indicate metadata related to each application such as operating system, identities of each application, and different users and devices used in connection with the network. As another example, the enriched collected network data may indicate geographical locations associated with each IP address that is communicating with the network and protocols through which applications conduct their communications in the network. Enriched collected first network data may include additional information associated with each application that may be used to analyze an application's failure in the conducted DRE expeditiously and accurately. As another example, the enriched collected network data may indicate a correlation between communications of network cloud nodes with the applications. The enriching process may involve adding information from different resources and historical data collected in the previously conducted DREs. For example, the enriching process may include adding historical data associated with each application, such as compliance reports submitted by each application in each of the previously conducted DREs, test results of each application in the previously conducted DREs, logs of previous incidents and events, performance records of each application in the previously conducted DREs, and the success rate of each application in passing a predefined threshold in each of the previously conducted DREs. Enriching the collected network data may indicate transmitted packets associated with the applications and direction of each transmitted packet. For example, in the sample network mentioned above, the enriched collected data network may indicate that application 302 sent a first data packet to cloud network node 308n and application 302a sent a second data packet to cloud network node 312n. According to another example, the enriched collected data network may indicate directions of data exchange between applications and cloud network nodes. For instance, in the sample network mentioned above, the enriched collected data network may indicate that a data package exchange between application 306a and cloud network node 312n was bisectional, i.e., application 306a sent a first portion of the data package to cloud network node 312n and cloud network node 312n sent a second portion of the data package to application 306a. In some instances, the enriched collected network data may indicate a unidirectional communication, originating from an application and ending at a cloud network node. For example, in the sample network mentioned above, the enriched collected network data may indicate that communication between application 302a and cloud network node 312n was one way, i.e., application 302a sent data packets to cloud network node 312n, but application 302a did not receive any data packets from cloud network node 312n. In FIG. 3, step 306 may include adding an indication of a percentage of traffic per region in the network. For example, in network 300, applications 302a, 304a, and 306a may cover traffic equally. As another example, application 302a may handle 25% of traffic, while applications 406 and 408 each handle 37.5%. It is noted that traffic handled by applications may differ from traffic handled by cloud network nodes. For example, in the sample network, application 302a may handle traffic by processing incoming data packets, while cloud network node 312n may handle managing load balancing.

In FIG. 3, correlating may comprise correlating network log times associated with the data packet activity with real-time cloud configuration data. The network log times may include different events and activities at specific time instants within a network. For example, if cloud network node 312n sends a data packet to application 306a at a particular time instant, this event is recorded in network log times. According to another example, if a data transfer between application 302a and cloud network node 312n took one minute, a starting time, an ending time, and the duration of the data transfer, i.e., one minute, are recorded in network log times. The computing device may correlate network log times associated with communications of cloud network nodes with inventory data. Inventory data of a network may be a list of all applications, physical devices, and resources available in the network.

At step 308, the computing device may determine which application relied on the unavailable cloud network node. Examples of reliance of an application on cloud network nodes may include an application switching to a backup cloud network node, an application redirecting traffic to a cloud network node, an application failing over to a cloud network node in another region, and an application switching to a backup cloud network node in critical circumstances. Other examples of an application on cloud network nodes may be an application sending a data packet to a cloud network node, an application receiving a data package from a cloud network node, and an application communicating with a cloud network node above a certain predefined authorized level. Reliance of application on an unavailable cloud network node may be in the form of sending data packets from an application to an unavailable cloud network node. For example, in the sample network mentioned above, the computing device may determine, based on the enriched collected network data, that application 304a relied on unavailable cloud network node 310n. According to an example, the computing device may determine whether the enriched network data satisfies a threshold. A threshold may be a predefined condition of when an event develops into a disaster. Defining a threshold may be a key component in determining the resiliency of the computer system. The threshold may be defined as the scope of communications between an application and an unavailable cloud network node. For instance, in the sample network, the threshold may be reached if application 304a sends more than ten percent of the enterprise's confidential information to the unavailable cloud network node 310n. As another example, the threshold may be met in the sample network if application 304a sends more than forty percent of management resources to unavailable cloud network node 310n. In FIG. 3, step 308 may include determining that one application sent a data packet to an unavailable cloud network node. For example, in the sample network, the computing device may determine that application 304a sent a file to an unavailable cloud network node 310n. Sending the file from application 304a to cloud network node 310n may be in contrast with what previously application 304a reported, which is that application 304a is resilient in case of a disaster.

At step 310, the computing device may indicate which application relied on an unavailable cloud network node. For example, in the sample network mentioned above, the computing device may display an output, indicating that application 304a relied on unavailable cloud network node 310n.

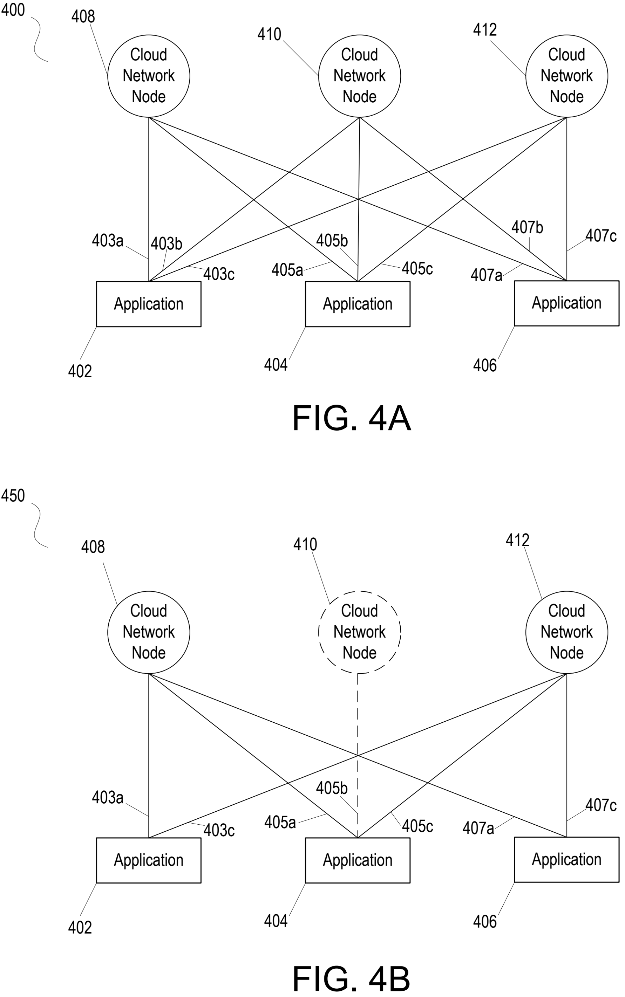

According to aspects of this disclosure, a network administration team may conduct DREs to validate compliance. The network administration team may run a validating method on a computing device to determine whether network applications comply with a set of predefined criteria in a DRE. The computing device may be a personal computer, a laptop, a supercomputer, a smartphone, a mobile device, a tablet, or any proper computing device that provides a computing facility for the network administration team to conduct a task. The computing device may be similar to computing device 101, as explained in FIG. 1. The network administration team may start from network 400, depicted in FIG. 4A, and then through running a simulation, proceed to FIG. 4B. It is to be understood that FIG. 4A and FIG. 4B are depicted to show validating concepts according to some features of this disclosure-this disclosure is still valid when, for example, the number of applications is in thousands.

FIG. 4A depicts an example of a network with three applications in communication with three cloud network nodes. In FIG. 4A, the three applications are in communication with three cloud network nodes. Each of the applications is depicted in FIG. 4A may represent an application that is required or recommended to be tested in a DRE-for example, applications depicted in FIG. 4A may represent an enterprise's financial system, communication tool, and customer database. According to another example, applications depicted in FIG. 4A may be a human resource application, a supply chain management, and an email exchange program. Each of the cloud node networks is depicted in FIG. 4A may represent a component in a cloud network. For example, each cloud network node may perform a specific task such as data processing, communication, or data encryption. The three applications, i.e., application 402, application 404, and application 406, and the three cloud network nodes, i.e., cloud network node 408, cloud network node 410, and cloud network node 412, operate with network 400. In FIG. 4A, applications may be in communication with cloud network nodes via some paths, e.g., path 403a. Via depicted paths in FIG. 4A, applications may exchange, for example, backup files, data, application states, and configuration information with cloud network nodes.

In FIG. 4A, application 402 is in communication with cloud network node 408 via path 403a, application 402 is in communication with cloud network node 410 via path 403b, and application 402 is in communication with cloud network node 412via path 403c. Also, in FIG. 4A, application 404 is in communication with cloud network node 408 via path 405a, application 404 is in communication with cloud network node 410 via path 405b, and application 406 is in communication with cloud network node 412 via path 405c. Further, in FIG. 4A, application 406 is in communication with cloud network node 408 via path 407a, application 406 is in communication with cloud network node 410 via path 407b, and application 406 is in communication with cloud network node 412 via path 407c. Some of the paths depicted in FIG. 4A may be unidirectional, while some other paths may be bidirectional. For example, path 405a may be unidirectional via which application 404 may send a data packet to cloud network node 408 while application 404 may not receive any information from cloud network node 408. As another example, path 407b may be bidirectional via which application 406 may send and receive data packets in communication with cloud network node 410. Based on the design of network 400, not all paths depicted in FIG. 4A may be present. For example, path 407a and path 407b may be absent, i.e., application 406 communicates with cloud network node 412 via path 407c. As another example, path 403a may be lacking, application 402 may communicate with cloud network node 410 via path 403b, and application 402 may communicate with cloud network node 412 via path 403c.

The computing device monitors communications of at least one of cloud network nodes 408, 410, and 412. Communications of cloud network nodes 408, 410, and 412 may include data packets received by cloud network nodes 408, 410, and 412 and/or sent by cloud network nodes 408, 410, and 412. Cloud network nodes 408, 410, and 412 provide access to applications 402, 404, and 406. Communications of cloud network nodes 408, 410, and 412 may include communications with applications 402, 404, and 406. The computing device may monitor communications of cloud network nodes 408, 410, and 412 with other applications or components in network 400 that are not shown in FIG. 4A. Applications or components not shown in FIG. 4A may not be critical for an accurate evaluation of the computer system in the DRE. For example, the computing device may monitor communications of cloud network nodes 408, 410, and 412 with a non-essential email service, a testing and development environment, a social media platform used for marketing purposes, or data analytics not shown in FIG. 4A. By monitoring communications of cloud network nodes 408, 410, and 412, the computing device collects network 400 data.

For each application, the computing device may add an indication of a percentage of traffic per region in a cloud environment, such as network 400. For example, in network 400, applications 402, 404, and 406 may cover traffic equally, i.e., each handling 33% of traffic. As another example, application 402 may handle 50% of traffic, while applications 406 and 408 may handle 25%. It is noted that traffic handled by applications may differ from traffic handled by cloud network nodes. For example, in network 400, application 402 may handle traffic by processing incoming data packets while cloud network node 412 may handle managing load balancing.

The computing device then correlates communications of cloud network nodes 408, 410, and 412 with applications 402, 404, and 406. According to an example, correlating communications with applications 402, 404, and 406 means tracing a data flow to determine which application sent or received the data flow. According to another example, the computing device may create a mapping between which cloud network nodes 408, 410, and 412 sent a data package to which of applications 402, 404, and 406. Further, the computing device may create another mapping between which cloud network nodes 408, 410, and 412 received a data packet from which applications 402, 404, and 406. As another example, the computing device may determine that a data package was sent from application 404 to cloud network 410 via path 405b. Still, as another example, the computing device may determine that cloud network node 412 sent a 100MB file to application 406 via path 407c. The computing device enriches network 400 data by correlating cloud network nodes 408, 410, and 412 communications. Indeed, in addition to network 400 data, the computing device takes into account how data is exchanged between applications 402, 404, and 406 and cloud network nodes 408, 410, and 412. For each application 402, 404, and 406, the enriched network 400 data indicate data packages received or sent by each application 402, 404, and 406, and a direction for each data package. For example, the computing device may determine whether an application receives or sends a specific data package. As another example, the computing device may determine whether (1) application 404 sent a data package to cloud network node 410, (2) cloud network node 410 sent a data packet to application 404, or (3) both (1) and (2).

The computing device may enrich network 400 data by discarding some data associated with monitoring applications in network 400. For example, the computing device may determine that some data collected during monitoring of applications is not needed. Discarding no-longer-needed data increases the computing device's efficiency. In some instances, the computing device may collect terabytes of data, and discarding a portion of collected data that is no longer needed for an intended purpose can significantly improve the efficiency of the computing device. For instance, in monitoring application 402, the computing device may have collected the personal information of the enterprise's employees in connection with application 402. Application 402 may run a human resources software that includes the personal information of the enterprise's employees. Discarding the collected personal information may increase efficiency as the collected personal information is not crucial for testing an application's performance. Discarding some collected data may include discarding a redundant portion of collected data. For example, if application 402 and application 404 contain the same data set, collecting the data set from both application 402 and application 404 may cause redundancy. Discarding a copy of the data set may be beneficial to improve efficiency.

The computing device may correlate network log times associated with communications of cloud network nodes with real-time configuration data. The network log times may include different events and activities at specific time instants within network 400. For example, if cloud network node 412 sent a data packet to application 406 at a particular time instant, this event is recorded in network log times. According to another example, if a data transfer between application 402 and cloud network node 412 took one minute, a starting time, an ending time, and the duration of the data transfer, i.e., one minute, are recorded in network log times. The computing device may correlate network log times associated with communications of cloud network nodes with inventory data. Inventory data of network 400 may be a list of all applications, physical devices, and resources available in network 400. For instance, the computing device may correlate that at 12:05 PM EST on December 10, 2024, cloud network node 408 sent its data packages to a subset of computers that use application 402. As another example, the computing device may correlate that between 12:01 AM PST and 4:05 AM PST on December 10, 2024, all mobile devices running application 406 sent a cloud network node 412 a request to connect.

The computing device may perform a resiliency exercise by simulating that a cloud network node is unavailable. Running the simulation may be a part of conducted DRE. For example, in FIG. 4B, cloud network node 410 is unavailable in network 450. However, cloud network node 410 is still shown with broken lines for discussion purposes. In FIG. 4B, network 450 differs from network 400 in Fig. 4A. For example, in FIG. 4B, cloud network node 410 is absent. Also, in FIG. 4B, path 403b, representing a line of communication between application 402 and cloud network node 410 is also unavailable. Indeed, after realizing that cloud network node 410 is unavailable, application 402 cut its path with cloud network node 410. Further, in FIG. 4B, path 407b, representing a line of communication between application 406 and cloud network node 410 is also unavailable. Indeed, after realizing that cloud network node 410 is unavailable, application 406 cut its path with cloud network node 410. However, application 404 still maintains its communication path, i.e., path 405b, with cloud network node 410, mistakenly thinking that cloud network node 410 is still present and available.

The computing device may perform the simulation by deactivating a cloud network node. For example, in FIG. 4B, the computing device may deactivate cloud network node 410. According to an example, the computing device may deactivate cloud network node 410 by disconnecting cloud network node 410 from network 400. As another example, the computing device may shut down services running on cloud network node 410. The computing device may deactivate cloud network node 410 by decommissioning cloud network node 410.

In FIG. 4B, the computing device may monitor communications in network 450, which may include data packets exchanged between cloud network nodes and applications. Communications in network 450 may include data exchanged between applications 402, 404, and 406 and cloud network node 410, which is unavailable. Although applications 402 and 406 cut their communications paths, i.e., path 403b and 407b, respectively, with cloud network node 410, application 404 may still communicate with cloud network node 410. For example, application 405b may send data packets to cloud network node 410, mistakenly believing that cloud network node 410 is still available. According to another example, if a hacker team exercised control over cloud network node 410, and made cloud network node 410 unavailable, application 404 may still send some data packets, containing some confidential information of enterprise's consumers to cloud network node 410, mistakenly believing that cloud network node 410 is still available and under the enterprise's control. By monitoring communications in network 450, the computing device may collect network 450 data. Network 450 data may include data packets exchanged between cloud network nodes 408, 410, and 412, and applications 402, 404, and 406.

The computing device may collect application performance data. For example, the computing device may collect performance data of application 404 during the unavailability of the cloud network node 410. As another example, the computing device may collect performance data for application 406 during the unavailability of cloud network node 410. By having performance data of applications, the computing device may determine whether applications were resilient to the unavailability of cloud network nodes. For example, performance data for application 406 may suggest to the computing device that application 406 was resilient to the unavailability of cloud network node 410 because application 406 cut its communications with cloud network node 410 during the unavailability of cloud network node 410.

The computing device may compare the enriched network 400 data and network 450 data. One of the advantages of this comparison is how each application responded to a simulated unavailability of one of the cloud network nodes. Another advantage of this comparison is how alert each application is concerning changes in the configuration of cloud network nodes or, in general, changes in network configuration. Through this comparison, the computing device may determine whether any applications relied on any unavailable cloud network node during simulation. For example, the computing device may determine that although cloud network node 410 was unavailable during the simulation, application 404 still sent data packets to cloud network node 410 via path 405b. According to another example, application 404 may have received some data packets from cloud network node 410 via path 405b. The computing device may determine that an application in network 450 transmitted a data packet to an unavailable cloud network node. For example, the computing device may track data packets transmitted from application 404 to cloud network node 410 by examining path 405b. The computing device may determine that a data packet was transmitted from application 404 to cloud network node 410 via path 405b, and through this determination, the computing device may determine that application 404 relied upon cloud network node 410 during the unavailability of cloud network node 410.

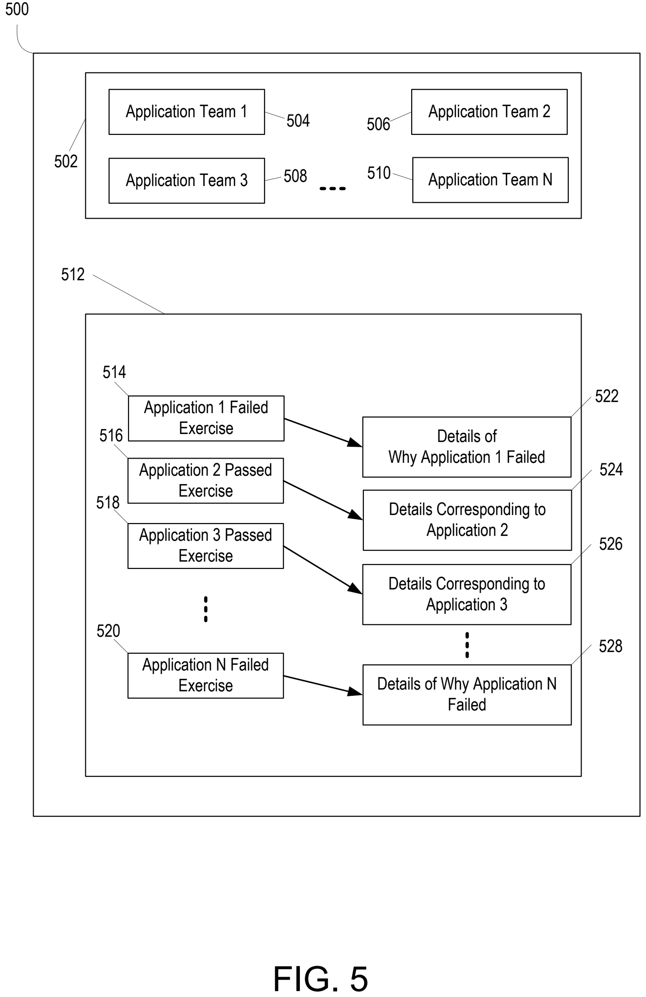

The computing device may output results of the aforementioned comparison. This output may comprise the results of determining, for example, whether any of the applications relied on the unavailable cloud network node during the simulation. For example, the computing device may indicate that application 404 relied on cloud network node 410 while cloud network node 410 was unavailable. In addition to indicating that an application relied on an unavailable cloud network node, the computing device may provide more details. For example, the computing device may output time and the nature of this reliance. For example, the computing device may output that application 404 sent a data package, containing confidential information of the enterprise to unavailable cloud network node 410 via path 405b at 12:01 EST on December 10, 2024. As another example, the computing device may provide an IP address of application 404 through which application 404 sent a data packet to cloud network node 410 during the simulation. The computing device may output a representation of the enriched network 400 data that indicates associations between applications 402, 404, and 406 and cloud network nodes 408, 410, and 412. The computing device may display the representation in a user interface. The representation may display a diagram or a table denoting communications between applications 402, 404, and 406 and cloud network nodes 408, 410, and 412. An example output of the computing device can be seen in FIG. 5.

FIG. 5 depicts an example for a visualization output during DREs displayed on a user computing device. In FIG. 5, a visualization output of a round of conducting DREs may be displayed as interface 500. Interface 500 may be shown on a personal computer, a laptop, a smartphone, a mobile device, a tablet, or any proper computing device with a displaying capability. Interface 500 may include different sections that are viewable by various groups of people. For example, interface 500 may include section 502, which displays relevant information for different application teams. For instance, section 504 may show relevant information regarding application 1 for application team 1. As another example, section 510 may show relevant information regarding application N (where N is a whole number greater than one) for application team 1. In FIG. 5, sections 504, 506, 508, and 510 may be designed to be viewable only to corresponding applicant teams. For example, application team 1 may view only section 1 and not section 506, section 508, or section 510. As another example, application team N may be able to see section 510 in addition to sections 504, 508, and 508, while application team 1 may view only section 504 and not other sections in section 502. Different displaying options may be implemented for section 502.

In FIG. 5, sections 504, 506, 508, and 510 may display some details regarding each application. For example, section 504 may display detailed information for application team 1, delineating that application 1 failed in a conducted DRE. In addition to informing application team 1 that application 1 failed in the conducted DRE, section 504 may provide some information about the issue that caused the failure. For example, section 504 may inform application team 1 that a broken component caused the failure in the conducted DRE. Section 504 may provide an IP address associated with the broken component based on the network data collected during the DRE. If the broken component changed its IP address, section 504 may provide a list containing the IP addresses that the broken component acquired. For example, in addition to the IP address of the broken component, section 504 may provide a list of components that were in communication with the broken components, receiving or sending a data packet. Section 504 may guide application team 1 on how to fix the broken component. Section 504 may provide an option for application team 1 that application team 1 may request to receive professional assistance to address the issue. Depending upon the timelines of different DREs, application teams whose applications failed the conducted DRE may be given a timeline to address failures associated with their application. For example, if application 1 failed the conducted DRE, application team 1 may be given a week, for instance, until the following DRE, to address the failure and communicate their findings to a contact point. In addition to reporting how each application performed in the conducted DRE, sections 504, 506, 508, or 510 may provide some recommendations for their respective application team. For example, although application 3 has passed the conducted DRE, section 508 may provide some suggestions for application team 3 on how to improve application 3 to perform better in the following DRE.

In FIG. 5, section 512 displays relevant information regarding applications for a network administration team. In addition to section 512, the network administration team may view section 502. The network administration team may view what applications failed or passed the conducted DRE. For example, in FIG. 5, section 514 may show that application 1 failed the exercise. Section 514 may provide more details about the failure of application 1 in the conducted DRE. For example, section 514 may also show that although application 1 failed the conducted DRE, application 1 was successful in 80 percent of the defiled criteria in the conducted DRE. In FIG. 5, section 516 may show that application 2 passed the conducted DRE, section 518 may show that application 3 failed the conducted DRE, and section 520 may show that application N failed the conducted DRE. Section 516 may show more than a message that application 2 passed the conducted DRE. For example, section 516 may show that application 2 passed all required steps defined in the conducted DRE but failed in 2 out of 5 recommended steps specified in the conducted DRE.

In FIG. 5, section 512 may include other sections, such as sections 522, 524, 526, and 528, providing details on why each application failed or passed the conducted DRE. In FIG. 5, for example, section 522 may provide details for the network administration team on why application 1 failed the conducted DRE. Section 522 may provide, for example, what specific component(s) of application 1 caused the failure. As another example, section 522 may provide a comprehensive list of application 1 components, delineating details about application 1 components. Section 522 may provide some network data associated with the application 1 failure. For example, section 522 may display an IP address of the failed application1 component. As another example, if the failed application 1 component acquired several IP addresses during the conducted DRE test, section 522 may provide a list of all the IP addresses. Section 522 may provide some details about communications of the failed application 1 component during the conducted DRE. For example, if the failed application 1 component was in communication with other applications or components of another application, section 522 may provide details regarding the communications of the failed application 1 component. For example, if the conducted DRE is about simulating the resiliency of the computer system with respect to the spread of a computer virus, it may be important to know about communications of the failed application 1 component. For example, if the failed application 1 component communicated the simulated computer virus to application 5, section 522 may display a message that application 1 communicated with application 5 during the conducted DRE.

In FIG. 5, sections 524 and 526 may display related information about applications 2 and 3, respectively. For example, in addition to showing that application 2 passed the conducted DRE, section 524 may show related network data associated with application 2. As another example, section 524 may display a list of all or a subset of all application 2 components, and their associated performance during the conducted DRE. Section 524 may display a performance associated with each component of application 2. For example, according to a predefined criterion in the conducted DRE, section 524 may display that although all the components of application 2 passed the conducted DRE, six out of eight components scored higher than a threshold, while two of eight components scored lower than the threshold. Although not shown in FIG. 5, each of sections 522, 524, 526, or 528 may provide an option for the network administration team to communicate some details with application teams. For example, section 526 may provide an option for the network administration team through which the network administration team may send some information on the performance of application 3 during the conducted DRE. As another example, suppose, unknown to the application N team, a component of application N caused the failure of application N in the conducted DRE while the application N team reported that their application was compliant. Section 528 may allow the network administration team to flag the discrepancy and send the discrepancy to application team N. Also, section 528 may provide an option for application team N to recommend some solutions to application team N on how to resolve the discrepancy or address the failed application N component. Further, section 528 may provide some details about communication details of the failed application N component. Section 528 may display a history summary of application N's performance in results in previously conducted DREs. For example, section 528 may display that in the prior five conducted DREs, application N succeeded in all of the prior conducted DREs. Section 528 may display an option for the network administration team to see a full report of previously conducted DREs and the detailed performance of application N in all of the previously conducted DREs.

In FIG. 5, section 502 may be displayed for all application teams, while section 512 is displayed for the network administration team. In FIG. 5, application team 1 may be able to see its corresponding section, i.e., section 504, and the corresponding section for application team N, i.e., section 510. However, application team N may be able to see only its own corresponding section, i.e., section 510. In FIG. 5, however, the network administration team may see section 502 with all its associated sections and section 512 with all its related sections. The network administration team may exercise an option to give access to application teams to view section 512 or a specific section in section 512. For example, the network administration team may allow application team 1 to see sections 514 and 522, which are related to application 1, and sections 520 and 528, which are related to application N.

According to one example, the network administration team may customize different sections in 500. For example, the network administration team may add some options to enhance the display of information for the network administration team or any application team. For instance, in conducting the DRE, the network administration team may not need to wait until the completion of the conducted DRE. Instead, the network administration team may add a section to section 500 to dynamically show the results for each application while conducting the DRE. As another example, the network administration team may add an option to see the performance of each application at each time instant of conducting the DRE. For example, to better evaluate the performance of application 1, the network administration team may add an option to see the performance of application 1 based on the prior performance of application 1, the network in real-time. Although not shown in FIG. 5, section 522 may provide an option to display a comparison between what application 1 reported and how application 1 performed. For example, if application 1 reported that application 1 is compliant with the conducted DRE, and later, it turns out that due to a broken component in application 1, a comparison may be displayed to show this discrepancy.

In FIG. 5, if the number of applications is above a threshold number, section 502 or section 512 may be displayed in different pages. Due a large number of applications, for example, 500 applications, and it may be more comprehensible to show applications results in several pages in section 502. Another reason that section 502 or section 512 may be displayed in different sequence is because usually a massive amount of data is generated and it may be more comprehensible for the network administration team to see compliance results in a sequence. The network administration team may add an option to sections 502 or 512 that shows network data associated with each application. For example, section 524 may add network data, for example, IP addresses or ports, associated with application 2.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computing device configured to proactively monitor application performance on a network to validate compliance during disaster recovery exercises, the computing device comprising:
one or more processors; and
memory storing instructions that, when executed by the one or more processors, cause the computing device to:
collect first network data by monitoring first packet activity of one or more cloud network nodes that provide access to one or more applications;
enrich the first network data by correlating the first packet activity of the one or more cloud network nodes with at least one of the one or more applications, wherein the enriched first network data indicates, for each application of the one or more applications:
one or more packet transmissions corresponding to the application; and
a directionality of packet traffic associated with the application;
perform a resiliency exercise by simulating unavailability of at least one of the one or more cloud network nodes;
collect, during the simulated unavailability of the at least one of the one or more cloud network nodes, second network data by monitoring second packet activity of the one or more cloud network nodes that provide access to the one or more applications;
determine, by comparing the enriched first network data and the second network data, whether at least one application of the one or more applications relied on the at least one of the one or more cloud network nodes during the simulated unavailability of the at least one of the one or more cloud network nodes; and
output, based on whether the at least one application of the one or more applications relied on the at least one of the one or more cloud network nodes during the simulated unavailability of the at least one of the one or more cloud network nodes, an indication of whether the at least one application of the one or more applications was resilient to failure of the at least one of the one or more cloud network nodes.

2. The computing device of claim 1, wherein the instructions, when executed by the one or more processors, further cause the computing device to:
collect, during the simulated unavailability of the at least one of the one or more cloud network nodes, application performance data, wherein the instructions, when executed by the one or more processors, cause the computing device to output the indication of whether the at least one application of the one or more applications was resilient to failure of the at least one of the one or more cloud network nodes based on the application performance data.

3. The computing device of claim 1 or 2, wherein the instructions, when executed by the one or more processors, further cause the computing device to enrich the first network data by:
(a) causing the computing device to: add, to the first network data and for each application of the one or more applications, an indication of a percentage of traffic per region; and/or
(b) discarding, from the first network data, data associated with monitoring of the one or more applications.

4. The computing device of any one of claims 1 to 3, wherein the instructions, when executed by the one or more processors, further cause the computing device to correlate the first packet activity of the one or more cloud network nodes with at least one of the one or more applications by causing the computing device to:
correlate one or more network log times associated with the first packet activity with one or more of:
real-time cloud configuration data; or
inventory data.

5. The computing device of any one of claims 1 to 4, wherein the instructions, when executed by the one or more processors, further cause the computing device to:
(a) simulate the unavailability of at least one of the one or more cloud network nodes by deactivating the at least one of the one or more cloud network nodes; and/or
(b) output, in a user interface, a representation of the enriched first network data that indicates one or more associations between the one or more applications and the one or more cloud network nodes.

6. The computing device of any one of claims 1 to 5, wherein the instructions, when executed by the one or more processors, cause the computing device to determine whether the at least one application of the one or more applications relied on the at least one of the one or more cloud network nodes during the simulated unavailability of the at least one of the one or more cloud network nodes based on a determination that, during the simulated unavailability of the at least one of the one or more cloud network nodes, the at least one application transmitted packet traffic to the at least one of the one or more cloud network nodes.

7. A method for proactively monitoring application performance on a network to validate compliance during disaster recovery exercises, comprising:
performing a resiliency exercise by simulating unavailability of at least one cloud network node that provide access to at least one application;
collecting, during the simulated unavailability of the at least one cloud network node, network data by monitoring packet activity of the at least one cloud network node that provide access to one or more applications;
enriching the network data by correlating the packet activity of the at least one cloud network node with at least one application, wherein the enriched network data indicates:
one or more packet transmissions corresponding to the at least one application; and
a directionality of packet traffic associated with the at least one application;
determining, based on the enriched network data, whether the at least one application relied on the at least one cloud network node during the simulated unavailability of the at least one cloud network node; and
outputting, based on whether the at least one application relied on the at least one cloud network node during the simulated unavailability of the at least one cloud network node, an indication of whether the at least one application was resilient to failure of the at least one cloud network node.

8. The method of claim 7, wherein determining whether the at least one application relied on the at least one cloud network node during the simulated unavailability of the at least one cloud network node:
(a) comprises determining whether the enriched network data satisfy a threshold; and/or
(b) is based on a determination that, during the simulated unavailability of the at least one cloud network node, the at least one application transmitted packet traffic to the at least one cloud network node.

9. The method of claim 7 or 8, further comprising:
collecting, during the simulated unavailability of the at least one cloud network node, application performance data, wherein outputting the indication of whether the at least one application was resilient to failure of the at least one cloud network nodes is based on the application performance data.

10. The method of any one of claims 7 to 9, wherein:
(a) enriching the network data comprises adding, to the network data and for the at least one application, an indication of a percentage of traffic per region; and/or
(b) simulating the unavailability of at least one of the one or more cloud network nodes comprises deactivating the at least one of the one or more cloud network nodes.

11. The method of any one of claims 7 to 10, wherein correlating the packet activity of the at least one cloud network node with at least one application comprises correlating one or more network log times associated with the packet activity with one or more of:
real-time cloud configuration data; or
inventory data.

12. One or more non-transitory computer-readable media storing instructions that, when executed by one or more processors of a computing device, cause the computing device to:
collect first network data by monitoring first packet activity of one or more cloud network nodes that provide access to one or more applications;
enrich the first network data by correlating the first packet activity of the one or more cloud network nodes with at least one of the one or more applications, wherein the enriched first network data indicates, for each application of the one or more applications:
one or more packet transmissions corresponding to the application; and
a directionality of packet traffic associated with the application;
perform a resiliency exercise by simulating unavailability of at least one of the one or more cloud network nodes;
collect, during the simulated unavailability of the at least one of the one or more cloud network nodes, second network data by monitoring second packet activity of the one or more cloud network nodes that provide access to the one or more applications;
determine, by comparing the enriched first network data and the second network data, whether at least one application of the one or more applications relied on the at least one of the one or more cloud network nodes during the simulated unavailability of the at least one of the one or more cloud network nodes; and
output, based on whether the at least one application of the one or more applications relied on the at least one of the one or more cloud network nodes during the simulated unavailability of the at least one of the one or more cloud network nodes, an indication of whether the at least one application of the one or more applications was resilient to failure of the at least one of the one or more cloud network nodes.

13. The one or more non-transitory computer-readable media of claim 12, wherein the instructions, when executed by the one or more processors, further cause the computing device to:
(a) enrich the first network data by causing the computing device to: add, to the first network data and for each application of the one or more applications, an indication of a percentage of traffic per region; and/or
(b) correlate the first packet activity of the one or more cloud network nodes with at least one of the one or more applications by causing the computing device to: correlate one or more network log times associated with the first packet activity with one or more of: real-time cloud configuration data; or inventory data.

14. The one or more non-transitory computer-readable media of claim 12 or 13, wherein the instructions, when executed by the one or more processors, further cause the computing device to simulate the unavailability of at least one of the one or more cloud network nodes by deactivating the at least one of the one or more cloud network nodes.

15. The one or more non-transitory computer-readable media of any one of claims 12 to 14, wherein the instructions, when executed by the one or more processors, cause the computing device to determine whether the at least one application of the one or more applications relied on the at least one of the one or more cloud network nodes during the simulated unavailability of the at least one of the one or more cloud network nodes based on a determination that, during the simulated unavailability of the at least one of the one or more cloud network nodes, the at least one application transmitted packet traffic to the at least one of the one or more cloud network nodes.
